# EUROPEAN PATENT APPLICATION

(11) **EP 0 893 642 A1**
(43) Date of publication of application: **27.01.1999**
(21) Application number: 98500172.6
(22) Date of filing: 21.07.1998
(51) Int. Cl.: F16L 41/08, F16L 41/14

(54) **Universal bushing for directly tapping pipes**

(30) Priority: 23.07.1997 ES 9702036 U
(71) Applicant: Nieto Rodriguez, Fernando, 09001 Villarcayo (Burgos) (ES)
(72) Inventor: Nieto Rodriguez, Fernando, 09001 Villarcayo (Burgos) (ES)

(57) **Abstract**

The bushing (3) as such constituting the main (1) tapping or bypass and designed to radially cross the latter's wall through a bore (2), is provided at its inner end with a truncated cone-shaped expansion (5) acting as a means deforming a gasket (6) when said bushing tends to move outwards driven by a nut (9) which acts on a threaded sector (4) of the outer bushing end, and using the outer surface of the main (1) as a supporting base. The nut (9) acts on the wall of the pipe (1) with a washer (8) in between and a perimetric expansion (7) with which the gasket (5) is provided, in order for the latter not to be driven outwards by the actual bushing (3) whilst the nut is being tightened.

## Description

### OBJECT OF THE INVENTION

In accordance with the heading of this specification, the present invention relates to a bushing for directly tapping pipes, the structural and constituent characteristics of which are such that it becomes what is taken to be a universal bushing.

The object of the invention is primarily to provide the market and the general public with a new direct tapping system that requires no brackets, which applies to most currently known pipes, irrespective of their outer diameter, and can therefore be taken to be a truly universal bushing.

### BACKGROUND OF THE INVENTION

"Tapping" is the name used for any main bypass having a much smaller nominal diameter than the nominal diameter of the pipe or main as such in order to supply an end user (group or individual) with water without there being any nominal diameter variation before or after the water main tapping point.

The most commonly used tapping fitting is the so-called "tapping collar" which comprises a bracket with a head with respect to which the stop valve may be screwed or connected, which head may be an integral part of the respective bracket semi-ring or an element distinct from the semi-ring that is to surround the pipe.

Although there are "tapping collars" of a so-called universal kind because they are presumably adaptable to various outer pipe or main diameters, the fact is that the outer diameter variation they may adapt to is rather limited.

There is a second type of tapping, known as a "direct tapping", although the latter is only possible when the main or pipe material and its thickness allow a tapping connector to be screwed with a sufficient technical assurance.

There is a third type of tapping fitting based upon a special part integrally provided in the main. The special part that is normally used is the so-called bypass T and is usually made of the same material as the main.

In all cases, the tapping fitting ends in a stop cock or valve, and the auxiliary tapping pipe that is to take water to the user is connected after said stop element.

Now then, the currently used tapping systems and fittings have a number of drawbacks and problems, noteworthy being the following, inter alia:
- they are largely dependent on the outer pipe diameter;
- they offer little adaptability at the tapping outlet (they are normally provided with a male/female thread or flanged);
- they are not adaptable to certain types of pipes, for some have significant outer diameter variations with respect to conventional ones;
- tapping collars invariably use an element, which can result in a very significant structural corrosion.

### DESCRIPTION OF THE INVENTION

The object of the bushing of the invention is to solve the above-mentioned drawbacks, for it has first of all been devised as a truly universal element, avoiding on the one hand the excessive range of currently existing collars (namely, for instance, collars for ductile cast iron pipes; collars for plastic pipes; collars for fibro-cement pipes; collars for steel pipes, etc.) and on the other largely universalising the manner in which it is connected to the tapping stop valve or tapping pipe.

Furthermore, with the bushing of the invention, the corrodible elements at the tapping are reduced to a maximum and a substantial unification of the broad range of diameters at the tapping outlets is also achieved, which means that the fitting may be swiftly supplied, and hence the lesser the range the easier and safer this supply will be.

In this sense, the bushing of the invention comprises a tubular body of circular cross-section, hereinafter an expansion cylinder, which is radially fitted within an appropriate bore with which the pipe is purposely provided, the inner end of which cylinder is provided with a short outwardly expanding divergent sector.

Said expansion cylinder is complemented with a tubular rubber gasket fitted on a side surface sector of the cylinder, between the latter and the actual bore in the pipe.

In addition to the aforesaid two parts, the bushing includes a binding nut fitted on an outer end sector of the expansion cylinder as such, a fourth part comprising a washer which prevents friction or contact between the nut and the gasket being established between said nut and a large outer annular surface to stand as an abutment for the maximum penetration of the rubber gasket.

Now, therefore, when the nut is screwed on and tightened, the expansion cylinder is moved out over a certain distance, the divergent expansion at its inner end resulting in the gasket being deformed for a leak-proof closure to be achieved and for the whole bushing to be held still, defining the pipe tapping.

Based upon the structural characteristics of the bushing of the invention, a number of benefits and advantages are obtained which could be summed up as follows:
- it is not a collar as is conventionally the case, nor are brackets used for it to be fitted and fixed to the pipe, avoiding the outer diameter being dependent on the different types of existing pipes, the corrodible surface being at the same time decreased;
- the leak-proof closure is negative with respect to conventional systems, for it works downstream and the water pressure will therefore help obtain a more leak-proof seal;
- wholly corrosion-proof materials may be used (thermoplastic and PDM materials and other types of rubber such as nitrile);
- the pipe wall thickness is not selective for one tapping fitting or another to be used, providing it with a truly universal character with respect to the nature of the pipe;
- the outlet suits the needs of every tapping and the adapter therefore forms part of the fitting with all previously conceivable outlet variants;
- it allows a head arrangement simply by making slight changes in the current head tapping arrangement system.

The bushing described is essentially applicable in tappings for connecting the water main with the user system and in tappings for connecting venting valves, drain valves or any other small element with the main. It is moreover applicable in tappings for connecting bypass ends in stop valves or any other element requiring a bypass.

It should finally be noted that it is also applicable in tappings for the inlet or outlet of fluids in and from any tanks whatsoever, without having to weld or screw the bushing to the tank.

### BRIEF DESCRIPTION OF THE DRAWINGS

In order to complement the description that follows and enable a full understanding of the characteristics of the invention, a set of drawings is attached to the present specification based upon which the innovations and advantages of the bushing for directly tapping pipes made in accordance with the object of the invention will be more easily understood.

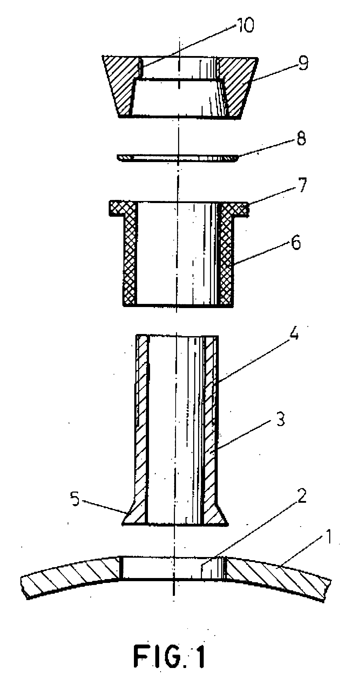

Figure 1.- Is an exploded side elevation cross-sectional view of the various components forming the bushing for direct tapping subject of the invention.

Figure 2.- Is a cross-sectional view of an initial fitting stage of the bushing to a pipe.

Figure 3.- Is the initial tightening stage of the bushing of the invention.

Figure 4.- Is the final tightening and definitive fitting stage of the bushing shown in the preceding two figures.

### DESCRIPTION OF THE PREFERRED EMBODIMENT

With reference to the above figures, the bushing of the invention, devised for directly tapping a pipe 1 provided with an appropriate bore 2, comprises an expansion cylinder 3 consisting of a tubular, cylindrical body with a filleted sector 4 and an end 5 which defines an outwardly divergent expansion, i.e. the expanding sector 5 can be taken to be externally truncated cone-shaped. The bushing also includes a rubber gasket 6 the outer diameter of which matches the diameter of the bore 2 in which the bushing is to be fitted, whereas the inner diameter of said gasket 6 matches the outer diameter of the actual expansion cylinder 3. Said gasket 6 is provided with a perimetric expansion 7 at one of its ends, taken to be the top end, supporting a washer 8 which constitutes a separation means to prevent contact between said rubber gasket 6 and the respective binding nut 9 with which the entire assembly is fixed to the pipe 1, the nut 9 including an inner filleted sector 10 which complements the filleted sector 4 provided on the expansion cylinder 3.

In accordance with the above characteristics, the bushing is fitted and works as follows:

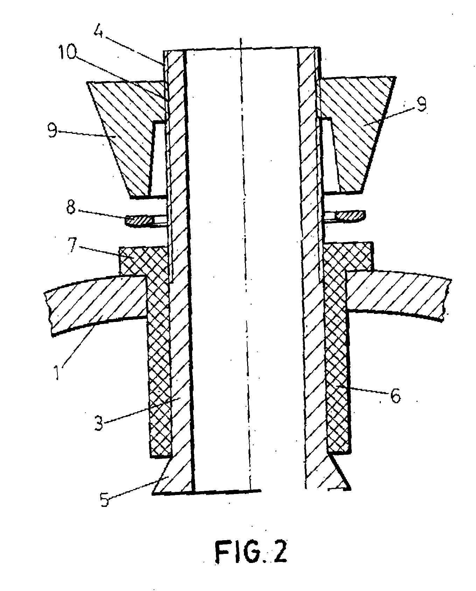

With reference to figure 2, the expansion cylinder 3 is passed with the rubber gasket 6 through the bore 2 of the pipe 1, in which the direct tapping bushing is to be fitted, until the top, perimetric expansion of the gasket 6 abuts on the top, perimetric edge of the bore 2 of such pipe 1.

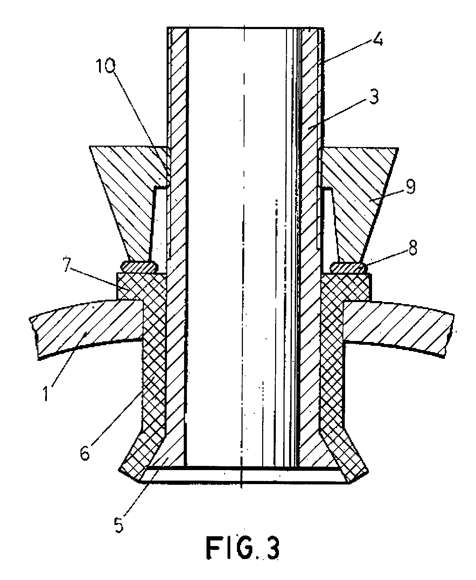

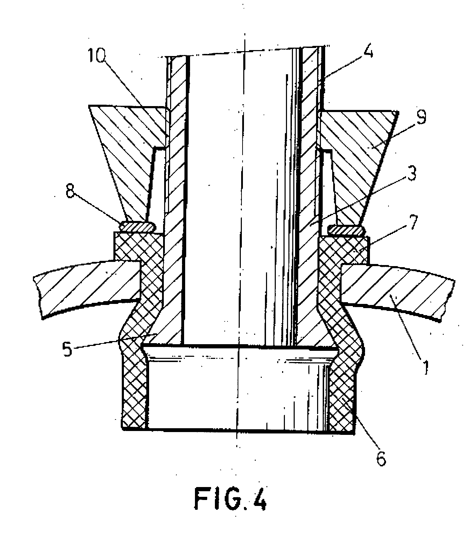

Next, the washer 8 is arranged, passing it through the top end of the expansion cylinder 3 until the washer comes to rest on the top surface of the annular expansion 7 of the gasket 6, whereupon the respective nut 9 is screwed on and tightened, which, as it is screwed onto the expansion cylinder 3, and once the lower edge of the nut 9 leans on and pushes against the gasket 7, will result in an upward movement of the expansion cylinder 3, which movement will result in the gasket 6 being deformed as initially shown in figure 3, until screwing is over or concludes and the gasket and expansion cylinder are fixed as shown in figure 4, in which the entire assembly is pressed against the pipe 1, thereby for a leak-proof seal to be obtained.

## Claims

1. **A UNIVERSAL BUSHING FOR DIRECTLY TAPPING PIPES,** characterised in that it comprises four essential associated and interconnected parts, defining an assembly which is radially fitted in an appropriate bore (2) purposely provided in the pipe (1) at issue; the first part comprising an expansion cylinder (3) having a threaded sector (4) and a short outwardly expanding sector (5) on its opposite end that defines a sort of truncated cone-shaped surface, whereas the second part comprises a rubber gasket (6) the inner diameter of which matches the outer diameter of the expansion cylinder (3), the outer diameter of said gasket (6) matching the diameter of the bore (2) of the pipe (1), the rubber gasket (6) having at its end, which is taken to be its top end, a perimetric expansion (7) the top surface of which defines a support for a washer (8) serving as an element separating said gasket (6) from a binding nut (9) that is fitted by being screwed onto the respective sector (4) of the expansion cylinder (3), the foregoing in order that upon the assembly being fitted within the bore (2) and the nut (9) being duly tightened, the expansion cylinder (3) will be moved upwards and the gasket (6) correspondingly deformed, in order for the assembly to be fixed and sealed.
